# EUROPÄISCHE PATENTANMELDUNG

(11) **EP 1 712 861 A1**
(43) Veröffentlichungstag der Anmeldung: **18.10.2006**
(21) Anmeldenummer: 06006551.3
(22) Anmeldetag: 29.03.2006
(51) Int. Cl.: F27B 17/02, A61C 13/20, F27D 23/00, F27D 9/00

(54) **Schmelzvorrichtung mit einem Schmelztiegel**

(30) Priorität: 11.04.2005 DE 202005005784 U
(71) Anmelder: Barget, Rudolf, 63549 Ronneburg (DE)
(72) Erfinder: Die Erfindernennung liegt noch nicht vor
(74) Vertreter: Schumacher, Bernd

(57) **Zusammenfassung**

Die Erfindung betrifft eine Schmelzvorrichtung mit einem Schmelztiegel (4) aus Quarzglas, ferner mit einem den Schmelztiegel umgebenden Isolierblock (9), ferner mit wenigstens einem zu dem Schmelztiegel führenden Strahlungsschacht (8) in dem Isolierblock, ferner mit einer in dem Strahlungsschacht angeordneten, auf den Schmelztiegel ausgerichteten länglichen Strahlungswärmequelle (3) in Form wenigstens eines kurzwelligen Quarz-Infrarotstrahlers und mit einer Kühlvorrichtung zum Erzeugen eines die Strahlungswärmequelle kühlenden Gas- oder Luftstroms.

Der vorliegenden Erfindung liegt die Aufgabe zugrunde, eine Schmelzvorrichtung der genannten Art mit einfachen Maßnahmen so auszubilden, daß sich Überhitzungen sowie Zerstörungen der Strahlungswärmequelle vermeiden lassen.

Zur Lösung der gestellten Aufgabe zeichnet sich eine Schmelzvorrichtung der genannten Art erfindungsgemäß dadurch aus, daß die Strahlungswärmequelle im Inneren eines hitzebeständigen Strömungskanals angeordnet ist, der zumindest in Richtung zum Schmelztiegel infrarotdurchlässig ist und der den kühlenden Gas- oder Luftstrom längs der Strahlungswärmequelle und dann aus der Schmelzvorrichtung nach außen leitet.

## Beschreibung

Die Erfindung betrifft eine Schmelzvorrichtung mit einem Schmelztiegel aus Quarzglas, ferner mit einem den Schmelztiegel umgebenden lsolierblock, ferner mit wenigstens einem zu dem Schmelztiegel führenden Strahlungsschacht in dem Isolierblock, ferner mit einer in dem Strahlungsschacht angeordneten, auf den Schmelztiegel ausgerichteten länglichen Strahlungswärmequelle in Form wenigstens eines kurzwelligen Quarz-Infrarotstrahlers und mit einer Kühlvorrichtung zum Erzeugen eines die Strahlungswärmequelle kühlenden Gas- oder Luftstroms.

Bei einer derartigen Schmelzvorrichtung gemäß dem deutschen Gebrauchsmuster 20304445 ist es bekannt, die Strahlungswärmequelle in dem Strahlungsschacht ausschließlich durch einen in diesem in Richtung zum Schmelztiegel strömenden Gas- oder Luftstrom zu kühlen. Hierbei besteht die Gefahr eines Strömungsabrisses sowie einer Verwirbelung mit dem Ergebnis einer örtlichen Überhitzung sowie daraus resultierenden Zerstörung der Strahlungswärmequelle. Außerdem erfolgt durch den Gas- oder Luftstrom eine zum Teil ungewollte und unkontrollierbare thermische Beeinflussung des zentralen Schmelztiegels.

Der vorliegenden Erfindung liegt die Aufgabe zugrunde, eine Schmelzvorrichtung der genannten Art, beispielsweise für die Dentaltechnik oder Elementaranalysetechnik, mit einfachen Maßnahmen so auszubilden, daß sich unter Vermeidung der geschilderten Nachteile Überhitzungen sowie Zerstörungen der Strahlungswärmequelle auch bei hohen Schmelztemperaturen und längerem Betrieb vermeiden lassen.

Zur Lösung der gestellten Aufgabe zeichnet sich eine Schmelzvorrichtung der im Oberbegriff von Anspruch 1 genannten Art erfindungsgemäß durch die im Kennzeichen dieses Anspruchs aufgeführten Merkmale aus, nämlich dadurch, daß die Strahlungswärmequelle im Inneren eines hitzebeständigen Strömungskanals angeordnet ist, der zumindest in Richtung zum Schmelztiegel infrarotdurchlässig ist und der den kühlenden Gas- oder Luftstrom längs der Strahlungswärmequelle und dann aus der Schmelzvorrichtung nach außen leitet.

Mit einer solchen Schmelzvorrichtung lassen sich sehr hohe Schmelztemperaturen auch über einen längeren Zeitraum betriebssicher erzielen. Der Strömungskanal stellt durch eine hochwirksame Zwangskühlung sicher, daß auch bei sehr hohen Temperaturen von beispielweise etwa 1600 Grad Celsius und längerem Betriebseinsatz keine temperaturbedingte Schädigung der Strahlungswärmequelle auftritt. Die kurzwellige Infrarotstrahlung des wenigstens einen Quarz-Infrarotstrahlers in dem wenigstens einen Strahlungsschacht des Isolierblocks gelangt durch diesen auf direktem Wege zum Schmelztiegel, so daß sich das Schmelzgut ohne bedeutsamen Energieverlust extrem schnell auf sehr hohe Temperaturen erhitzen läßt. Der Schmelzvorgang wird auch dadurch gefördert, daß durch den Isolierblock die Wärmeabstrahlung vom Schmelzgut deutlich reduziert ist.

Die besonders bevorzugte Weiterbildung von Anspruch 2 hat den Vorteil, daß der kühlende Gas- oder Luftstrom ungehindert auf die Strahlungswärmequelle einwirken und diese allseits wirksam kühlen kann. Ein solcher Strömungskanal ist preiswert, was insbesondere auch in Verbindung mit der Weiterbildung von Anspruch 3 zutrifft.

Die weiteren Ausgestaltungen der Ansprüche 4 bis 8 haben sich im praktischen Betrieb besonders bewährt. Insbesondere ist das unterseitige Einbringen des kühlenden Gas- oder Luftstroms in den Strömungskanal vorteilhaft, weil der erwärmte Gas- oder Luftstrom durch die Kaminwirkung selbsttätig aufsteigt und nach oben abgeführt wird.

Gemäß den Ansprüchen 9 und 10 kann der kühlende Gas- oder Luftstrom auf unterschiedliche Weise eingebracht werden. Wichtig ist dabei nur, daß stets eine wirksame Kühlung und Wärmeabfuhr gewährleistet sind.

Die weitere Ausgestaltung gemäß Anspruch 11 bewirkt eine zusätzliche außenseitige Kühlung des Strömungskanals, wodurch sich die Betriebssicherheit noch weiter steigern läßt.

Gemäß Anspruch 12 kann die Infrarotstrahlung mittels einer geeigneten reflektierenden Beschichtung des Strömungskanals noch wirksamer zum Schmelztiegel geleitet werden.

Die weitere Ausgestaltung mit wenigstens drei gleichmäßig verteilten Strahlungsschächte gemäß Anspruch 13 ist aus praktischen und kostenmäßigen Erwägungen heraus vorteilhaft, um dem Schmelzgut die Wärme von drei Seiten zuzuführen. Grundsätzlich kann diese Anzahl auch vermindert oder erhöht werden. Eine Vergrö-ßerung der Anzahl der Strahlungsschächte führt jedoch zu einem nicht unerheblichen gerätetechnischen Kostenanstieg und auch dazu, daß der Abstrahlungsverlust des Schmelzgutes bei abgeschalteten Quarz-Infrarotstrahlern wegen des reduzierten lsoliermaterials ansteigt, ohne daß eine bedeutende Verbesserung des Erhitzungsvorgangs vorliegt.

Die Erfindung wird nachfolgend an einem zeichnerisch dargestellten Ausführungsbeispiel näher erläutert. Es zeigen:

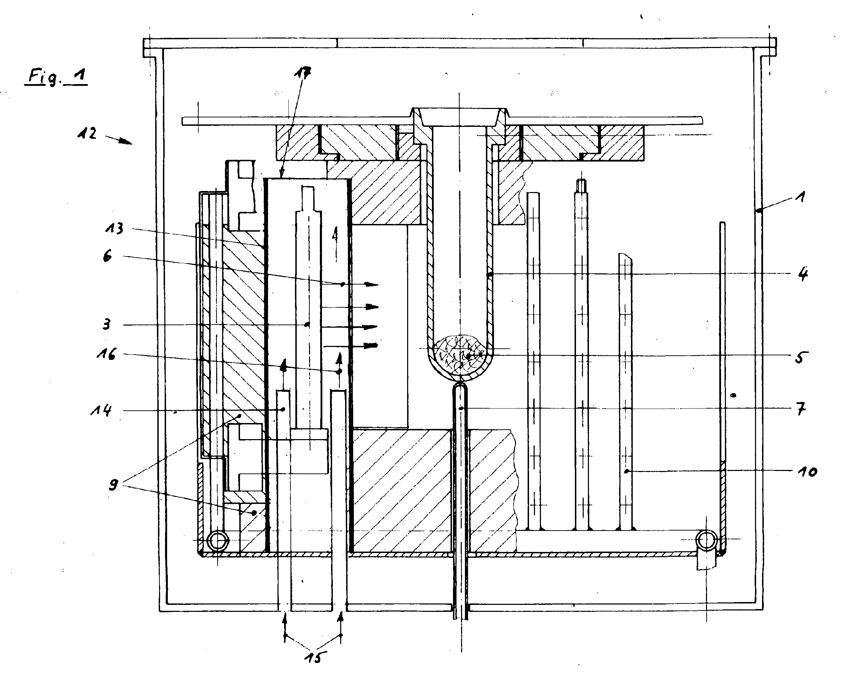

- Fig.1: eine Schmelzvorrichtung nach der vorliegenden Erfindung in einem vereinfachten Längsschnitt und
- Fig. 2: die Schmelzvorrichtung aus Fig. 1 in einer vereinfachten Draufsicht.

Gemäß den Figuren weist eine allgemein mit 12 bezeichnete Schmelzvorrichtung einen im vorliegenden Ausführungsbeispiel zylindrischen Behälter 1 auf, bei dem es sich um einen Gießzylinder für Dental- oder Analysezwecke handeln kann. Im Zentrum des Behälters 1 befindet sich ein von oben einsetzbarer und nach oben herausnehmbarer länglicher, vertikal angeordneter Schmelztiegel 4 mit einem darin enthaltenen Schmelzgut 5, wie einer dentalen Schmelzlegierung.

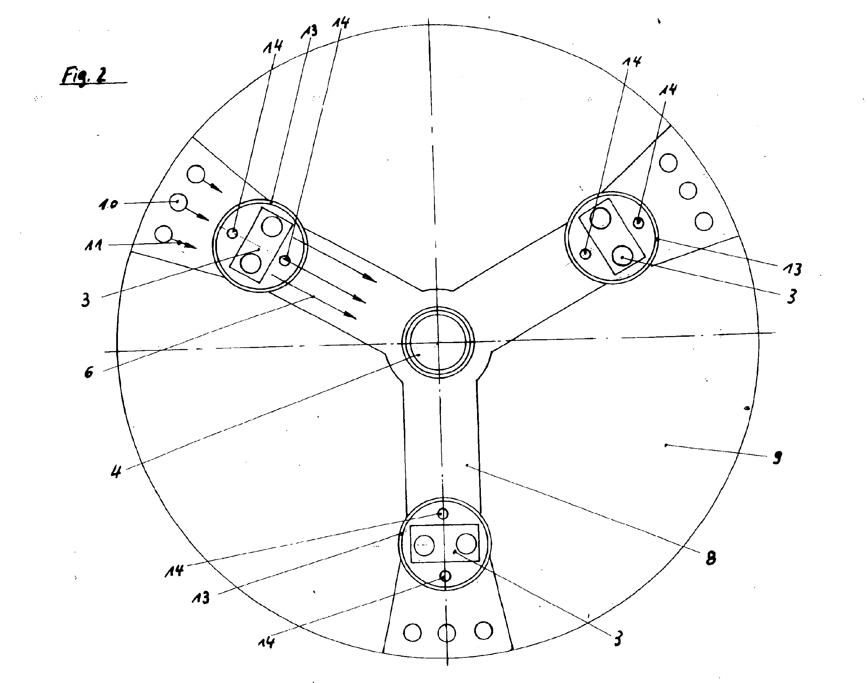

Der Schmelztiegel 4 ist zumindest seitlich und unten von einem lsolierblock 9 aus einem geeigneten Wärmeisoliermaterial umgeben. Gemäß Fig. 2 ist der Isolierblock im vorliegenden Fall mit drei über den Umfang gleichmäßig verteilten, radial verlaufenden und sich innen zu dem Schmelztiegel 4 öffnenden Strahlungsschächten 8 in Form von Einschnitten des Isoliermaterials ausgebildet. In jedem Strahlungsschacht 8 befinden sich im vorliegenden Fall zwei längliche, vertikal und in Umfangsrichtung versetzt angeordnete Quarz-Infrarotstrahler einer Strahlungswärmequelle 3, die zu dem Schmelztiegel 4 gelangende kurzvüellige Infrarotstrahlung 6 mit einer Wellenlänge von etwa 0,78µ bis etwa 1,4µ erzeugen.

Jede Strahlungswärmequelle 3 befindet sich mit Abstand in einem vertikalen Strömungskanal 13 in Form eines Schutzrohrs aus infrarotdurchlässigem, hitzebeständigem Quarzglas. Zwei mit einem Kühlgas- bzw. -luftstrom 15 versorgte Kühlstromrohre 14 münden von unten in den Strömungskanal 13 ein, so daß dieser von einem entsprechenden Kühlgas- bzw. -luftstrom 16 durchströmt wird, der an einem oberseitigen Kühlstromauslaß 17 aus dem Strömungskanal 13 austritt. Der Kühlgas- bzw. - luftstrom 16 überstreicht und kühlt direkt sowie in äußerst wirksamer Weise die Quarz-Infrarotstrahler der Strahlungswärmequelle 3. Infolge der Zwangsführung längs der Quarz-Infrarotstrahler durch das Kühlstromrohr 14 können keine Wirbel und somit örtliche Überhitzungen entstehen, zumal die abtransportierte Wärmenergie oben nach außen abgeleitet wird. Durch diese Maßnahmen ist ein langzeitiger Betriebseinsatz der Quarz-Infrarotstrahler der Strahlungswärmequellen 3 problemlos möglich.

Die Strömungskanäle 13 lassen sich auch in anderer Weise betreiben, beispielsweise durch oberseitiges Absaugen des Kühlgas- bzw. -luftstroms in den unten offenen Strömungskanälen. Es ist grundsätzlich auch ein vollständig geschlossener Kreislauf für den Kühlgas- bzw. -luftstrom möglich.

Radial außerhalb der Quarz-Infrarotstrahler der Strahlungswärmequellen 3 können in den Strahlungsschächten 8 zusätzliche Kühlstromdüsen 10 angeordnet sein, wie Druckluftquellen, die jeweils einen zentral gerichteten Kühlgas- oder -luftstrom 11 über die Strömungskanäle 13 mit den darin befindlichen Quarz-Infrarotstrahlern der Strahlungswärmequellen 3 leiten. Die Kühlgas- oder Kühlluftströme 11 kühlen ferner die Begrenzungen der Strahlungsschächte 8 sowie den Schmelztiegel 4 und verhindern somit ein übermäßiges Aufheizen dieser Teile.

Die relativ schmalen Strahlungsschächte 8 sind in Umfangsrichtung nur so breit und in vertikaler Richtung nur so hoch, daß sich die kurzwellige Infrarotstrahlung von den Quarz-Infrarotstrahlern der Strahlungswärmequellen 3 ungehindert bis zum Schmelztiegel 4 ausbreiten kann. Dadurch wird eine optimale Isolierwirkung des Isolierblocks 8 erzielt.

Die Strahlungsschächte 8 können im Betrieb an ihrer radialen Außenseite durch den Isolierblock 9 bzw. Teile desselben verschlossen sein, damit eine gute Wärmeisolation sichergestellt wird und an dieser Stelle kein Kühlgas- bzw. -luftstrom austreten kann.

Ein im vorliegenden Fall unten an den Schmelztiegel 4 angrenzendes Thermoelement 7 ermöglicht über einen entsprechenden Temperaturregelkreis ein geeignetes Einstellen und Regeln der Temperatur des Schmelzgutes 5.

In nicht dargestellter Weise können ferner Mittel vorgesehen sein, die ein geeignetes Formiergas in den heißen Schmelztiegel 4 einleiten. Dieses sorgt beim Verbrennen für eine Desoxidation des Schmelzgutes 5.

Ferner ist es möglich, den Quarz-Infrarotstrahlern 3 diese radial außen teilweise umschließende Spiegelrinnen zuzuordnen, durch die die zunächst auch nach außen gelangende Infrarotstrahlung 6 in Richtung zum Schmelztiegel 4 umgelenkt wird. Es ist alternativ auch möglich, die Strömungskanäle an ihren von dem Schmelztiegel 4 abweisenden Seiten mit einer die Wärmestrahlung der Strahlungswärmequelle 3 in Richtung zum Schmelztiegel 4 reflektierenden Beschichtung zu versehen.

Mit dieser Schmelzvorrichtung 12 lassen sich auf besonders einfachem Wege und relativ lange sehr schnell äußerst hohe Temperaturen von beispielsweise 1600 Grad Celsius erzielen, um das Schmelzgut 5 schnell zum Schmelzen zu bringen, damit es gegossen werden kann. Es genügen normale elektrische Versorgungsnetze, geringe Leistungen und einfache trafofreie Mittel zum Betreiben der Quarz-Infrarotstrahler der Strahlungswärmequellen 3, während bei älteren Schmelzvorrichtungen umfangreiche elektrische Bauteile, wie Trafos, HF Spulen etc., zum Erzeugen derart hoher Temperaturen erforderlich sind.

Ferner können die dem Schmelztiegel 4 benachbarten innenseitigen Oberflächen des Isolierblocks 9 in den Bereichen zwischen den Strahlungsschächten 8 mit Spiegeln oder spiegelnden Beschichtungen versehen sein, die die darauf gelangende Infrarotstrahlung zum Schmelzgut 5 reflektieren. Auch dadurch werden Energieverluste reduziert und der Erhitzungsvorgang beschleunigt. Diese Spiegel können in Umfangsrichtung gewölbt sein. Sie können zusätzlich auch an ihren vertikalen Endbereichen so gewölbt sein, daß die Infrarotstrahlung dort etwas nach unten bzw. oben in Richtung zum Schmelzgut 5 umgelenkt wird. Alle diese Maßnahmen dienen dazu, die Infrarotstrahlung auf das Schmelzgut zu konzentrieren, Wärmeverluste und damit Geräteerwärmungen zu reduzieren und somit sehr schnell sehr hohe Temperaturen des Schmelzgutes 5 zu erzeugen.

## Patentansprüche

1. Schmelzvorrichtung mit einem Schmelztiegel (4) aus Quarzglas, ferner mit einem den Schmelztiegel umgebenden Isolierblock (9), ferner mit wenigstens einem zu dem Schmelztiegel führenden Strahlungsschacht (8) in dem Isolierblock, ferner mit einer in dem Strahlungsschacht angeordneten, auf den Schmelztiegel ausgerichteten länglichen Strahlungswärmequelle (3) in Form wenigstens eines kurzwelligen Quarz-Infrarotstrahlers und mit einer Kühlvorrichtung zum Erzeugen eines die Strahlungswärmequelle kühlenden Gas- oder Luftstroms,
**dadurch gekennzeichnet,**
**daß** die Strahlungswärmequelle (3) im Inneren eines hitzebeständigen Strömungskanals (13) angeordnet ist, der zumindest in Richtung zum Schmelztiegel (4) infrarotdurchlässig ist und der den kühlenden Gas- oder Luftstrom (15, 16) längs der Strahlungswärmequelle und dann aus der Schmelzvorrichtung nach außen leitet.

2. Schmelzvorrichtung nach Anspruch 1, **dadurch gekennzeichnet, daß** der Strömungskanal (13) als ein die Strahlungswärmequelle (3) mit Abstand umgebendes Schutzrohr aus Quarzglas ausgebildet ist.

3. Schmelzvorrichtung nach Anspruch 2, **dadurch gekennzeichnet, daß** der Strömungskanal (13) im Querschnitt kreisrund ausgebildet ist.

4. Schmelzvorrichtung nach einem der Ansprüche 1 bis 3, **dadurch gekennzeichnet, daß** die Strahlungswärmequelle (3), der Strömungskanal (13) und der Schmelztiegel (4) übereinstimmende Längsrichtungen aufweisen.

5. Schmelzvorrichtung nach Anspruch 4, **dadurch gekennzeichnet, daß** die Längsrichtungen der Strahlungswärmequelle (3), des Strömungskanal (13) und des Schmelztiegels (4) vertikal verlaufen.

6. Schmelzvorrichtung nach einem der Ansprüche 1 bis 5, **dadurch gekennzeichnet, daß** wenigstens ein Kühlstromrohr (14) in ein Ende des Strömungskanals (13) einmündet, dessen anderes Ende offen ist.

7. Schmelzvorrichtung nach Anspruch 6, **dadurch gekennzeichnet, daß** das Kühlstromrohr (14) von unten in den Strömungskanal (13) einmündet.

8. Schmelzvorrichtung nach Anspruch 6 oder 7, **dadurch gekennzeichnet, daß** jede Strahlungswärmequelle (3) zwei in Richtung zum Schmelztiegel (4) nebeneinander angeordnete kurzwellige Quarz-Infrarotstrahler aufweist und daß für jede Strahlungswärmequelle wenigstens ein Kühlstromrohr (14) vorgesehen ist, das in Richtung zum Schmelztiegel (4) vor oder hinter der Strahlungswärmequelle (3) in den Strömungskanal (13) einmündet, oder zwei Kühlstromrohre (14) vorgesehen sind, die in Richtung zum Schmelztiegel (4) vor und hinter der Strahlungswärmequelle (3) in den Strömungskanal (13) einmünden.

9. Schmelzvorrichtung nach einem der Ansprüche 1 bis 8, **dadurch gekennzeichnet, daß** der Strömungskanal (13) kontinuierlich oder diskontinuierlich mit einem kühlenden Gas- oder Luftstrom (15, 16) beaufschlagt ist.

10. Schmelzvorrichtung nach einem der Ansprüche 1 bis 9, **dadurch gekennzeichnet, daß** der Strömungskanal (13) nur in einer Richtung oder abwechselnd in entgegengesetzten Richtungen mit einem kühlenden Gas- oder Luftstrom (15, 16) beaufschlagt ist.

11. Schmelzvorrichtung nach einem der Ansprüche 1 bis 10, **dadurch gekennzeichnet, daß** der Strömungskanal (13) außen von einem in dem Strömungsschacht (8) in Richtung zum Schmelztiegel (4) fließenden kühlenden Gas- oder Luftstrom (11) umspült ist.

12. Schmelzvorrichtung nach einem der Ansprüche 1 bis 11, **dadurch gekennzeichnet, daß** der Strömungskanal (13) an seiner von dem Schmelztiegel (4) abweisenden Seite eine die Wärmestrahlung der Strahlungswärmequelle (3) in Richtung zum Schmelztiegel (4) reflektierende Beschichtung aufweist.

13. Schmelzvorrichtung nach einem der Ansprüche 1 bis 10, **dadurch gekennzeichnet, daß** dem Schmelztiegel (4) wenigstens drei in dessen Umfangsrichtung gleichmäßig verteilte Strahlungsschächte (8) mit jeweils wenigstens einer Strahlungswärmequelle (3) zugeordnet sind.
